# EUROPEAN PATENT APPLICATION

(11) **EP 0 660 538 A2**
(43) Date of publication of application: **28.06.1995**
(21) Application number: 94309717.0
(22) Date of filing: 22.12.1994
(51) Int. Cl.: H04B 1/20

(54) **Remote control system**

(30) Priority: 24.12.1993 JP 328901/93
(71) Applicant: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Yasuzato, Masashi, Ohsato-gun, Saitama-ken (JP)
(74) Representative: Maury, Richard Philip

(57) **Abstract**

There is disclosed a remote control system for controlling equipment to be controlled from a remote place so as to set the equipment to a desired operation state wherein there are a plurality of combinations of control items to be controlled to achieve the desired operation state, the remote control system comprising: a special operation key; a transmission code storage device for storing a plurality of transmission codes corresponding to the plurality of control items; transmission code generation means for extracting in a given order the plurality of transmission codes stored in the transmission code storage means each time the special operation key is operated; and transmission means for transmitting the transmission code extracted by the transmission code generation means.

The remote control system further includes a data storage device for storing data according to a transmission code that was transmitted finally in an operation in which the equipment to be controlled was set correctly to the desired operation state. In operations performed after that, if the special operation key is operated, then transmission codes will be transmitted in an order that has been changed by the transmission code generation means according to the stored data in such a manner that the transmission code that was transmitted finally in the above-described operation will be transmitted first.

With the above arrangement, once the equipment to be controlled was set to the desired operation state using the special operation key, the equipment will be set to the desired operation state by only one key operation of the special operation key. Thus, the present invention provides a remote control system that can be used very easily.

## Description

### BACKGROUND OF THE INVENTION

### FIELD OF THE INVENTION

The present invention relates to a remote control system used in conjunction with electronic equipment such as a television receiver (hereafter refer to as a TV) or a video cassette tape recorder (refer to as a VTR). More particularly, the present invention relates to a remote control system having the capability of easily setting a plurality of control items having close relationships with each other as in the case where a VTR is connected to a TV so that a reproducing signal of the VTR may be displayed on the TV screen in which the operation mode of the TV should be set correctly so that it meets the signal output mode of the VTR.

### DESCRIPTION OF THE RELATED ART

In general, electronic equipment such as a VTR, TV, etc., is provided with a remote control system that enables a user present at a location apart from the main part of the equipment to control its operation or function. The remote control system includes a hand unit having operation keys corresponding to individual items to be controlled. When some key is pressed, a remote control signal is transmitted to the main part of the electronic equipment via for example an infrared ray modulated by the remote control signal. In response to the remote control signal, the main part of the electronic equipment controls a corresponding control item.

In the case of a VTR, the control items performed by the remote control system include for example turning on and off of electric power, recording, reproducing, pause, stop, fast forward and reverse operations. In addition to the above basic operations, selection of a channel of a built-in tuner and setting of a programming timer can also be controlled. In the case of a TV, turning on and off of electric power, selection of a channel, adjustment of sound volume, adjustment of colors, selection of an input signal such as an input signal received from a tuner or a signal provided via an external input terminal, etc., can be controlled.

In usual operation conditions in which a VTR is used in conjunction with a TV, setting is performed such that a reproducing signal of the VTR is transferred to the TV so that the reproducing signal is displayed on the TV screen. However, in this case, the VTR can output a reproducing signal not only at high frequencies corresponding to TV channel frequencies but also at a base-band frequency. Furthermore, in the VTR, it is required that the high frequency channel via which the reproducing signal is transferred to the TV is properly selected before turning on the power of the VTR. In the TV, on the other hand, channel selection is performed so that the output signal of the VTR can be correctly received via a channel corresponding to the output signal frequency of the VTR designated by the channel selection key of the remote control system, or otherwise, in response to the operation of the input selection key, setting is performed such that the TV can receive a signal at the base band frequency provided by the VTR.

A trend in recent electronic equipment is toward a greater number of control items in a remote control system. As a result, the hand unit has come to have a large number of keys that require complicated operations. To achieve desired operation states of electronic equipment, it is often required to set various control items. Thus, a user has to operate a lot of keys of the hand unit.

Particularly in the case where plural pieces of electronic equipment such as a VTR and TV are connected to each other so that they are used together, a certain piece of equipment is required to operate in a specific operation mode depending on the operation mode of other pieces of equipment connected to it, or it is required to change the procedure depending on the operation mode of other pieces of equipment to achieve a desired operation mode. Thus, the user has to perform complicated operations.

To solve the above problems, it is an urgent demand to realize a remote control system that can be used more easily to perform a desired controlling operation. One known technique to achieve this purpose is to provide a hand unit that can be used commonly for both VTR and TV. Even in this case, however, it is required to perform various control operations using various corresponding keys. Thus, complicated operations are still needed.

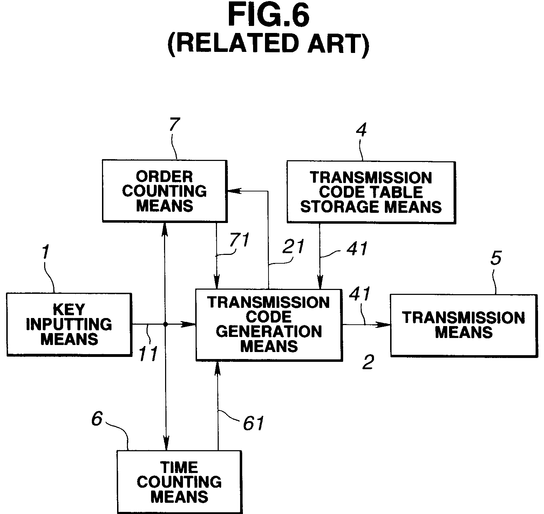

If a plurality of control items having close relationships with each other can be performed by sequential operations using the same key, a great improvement in operation efficiency will be definitely achieved. Figure 6 shows a remote control system having such a capability.

In the remote control system shown in Figure 6, there is provided key inputting means 1 comprising a key inputting mechanism such as a ten key system. If a special operation key of the key inputting means 1 is pressed, a key input signal 11 is generated and supplied to transmission code generation means 2, time counting means 6, and order counting means 7.

Each time the transmission code generation means 2 receives a key input signal 11, it reads a transmission code 41 from transmission code table storage means 4. The transmission code table storage means 4 is a storage circuit for storing a transmission code table containing a plurality of control items for a single or plural pieces of electronic equipment, wherein a plurality of transmission codes are stored in the transmission code table at predetermined addresses.

The transmission code generation means 2 reads, from the transmission code table storage means 4, a transmission code corresponding to count data 71 provided by the order counting means 7, and supplies the obtained transmission code 41 to the transmission means 5.

The transmission means 5 generates a remote control signal including the modulated transmission code 41, and transmits it to a receiving unit (not shown) of the electronic equipment.

The order counting means 7 counts the number of key operations, in response to the key input signal 11. A reading address of the transmission code table storage means 4 is set according to the count data 71 provided by the order counting means 7, and thus a corresponding transmission code is read out from the transmission code table storage means 4 each time a key is operated. If the count reaches a predetermined value, the count returns to an initial value. The order counting means 7 is also reset to the initial state in response to a reset signal 21 provided by the transmission code generation means 2, wherein the transmission code generation means 2 generates the reset signal 21 when some key other than the special operation key is operated or when the transmission code generation means 2 receives a signal from the time counting means 6.

The transmission means 5 converts the received transmission code 41 into for example a frequency-modulated infrared signal which is transmitted as a remote control signal via a light emitting diode.

On the other hand, when the time counting means 6 receives a key input signal 11 from the key inputting means 1, it resets the time count to an initial value, and begins a counting operation. If the time count reaches a predetermined value, for example 30 sec, then the time counting means 6 outputs a signal 61 to the transmission code generation means 2 thereby requesting that the order counting means 7 should be reset.

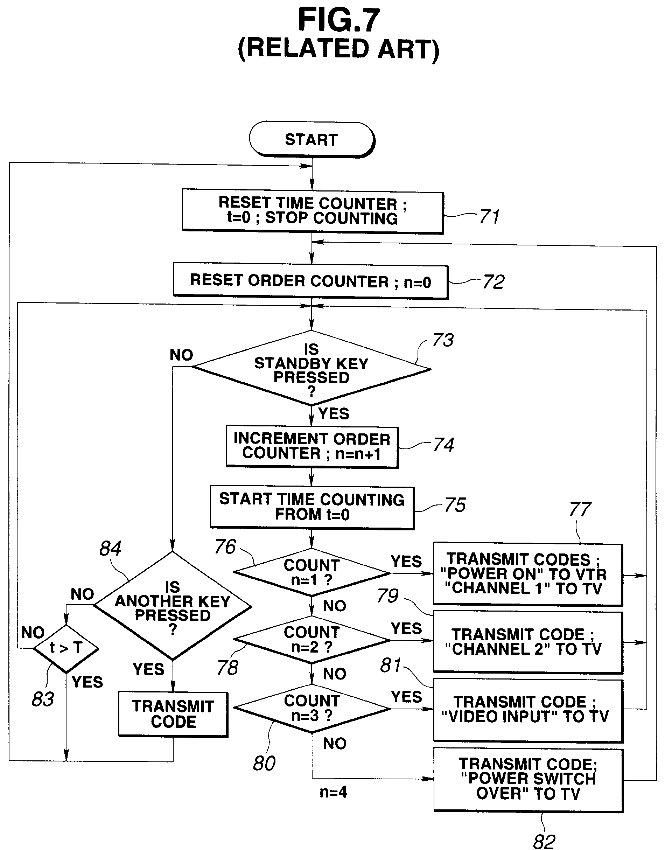

If a remote control system of this kind is used to control the output signal mode of a VTR and also to control the receiving operation mode of a TV, it is possible to perform a control operation such as that represented by the flow chart of Figure 7 wherein the control operation is performed each time a special operation key such as a STANDBY key is operated.

First, in this case, the time counting means 6 shown in Figure 6 stops its operation and resets its value such that t = 0 (step 71). The order counting means 7 is also reset to 0 (step 72). Then, it is determined whether the STANDBY key is operated (step 73). The first operation of the STANDBY key causes the order counting means 7 to be incremented by 1 (step 74), and also causes the time counting means 6 to start its counting operation from 0 (step 75). When the count of the order counting means 7 has become 1 and this fact is detected in step 76, the transmission means 5 transmits a code indicating that the VTR should be turned on and the TV should be set to channel 1 (step 77). The VTR outputs a video signal such as a character signal containing characters "STANDBY" for confirmation. At this point, if the power of the TV is in an on-state and the VTR is in a mode in which the output is supplied via channel 1, then an indication "STANDBY" is displayed on the TV screen and the operation is completed here. The completion of the operation is detected when the count t of the time counting means 6 has become greater than a predetermined value T (step 83). Thus, both time counting means 6 and order counting means 7 are reset to 0. On the other hand, if another key is operated and is detected (step 84) and the code corresponding to the key is transmitted, both time counting means 6 and order counting means 7 are reset to 0.

If "STANDBY" is not indicated, a second key operation will be performed, which will cause the order counting means 7 to become 2. If the transition to 2 in the order counting means 7 is detected in step 78, then the transmission means 5 transmits a code indicating that the TV channel should be changed to channel 2 (step 79), and the VTR outputs a video signal for confirmation. If "STANDBY" is not indicated, a third key operation is performed which causes the TV to change its operation mode such that the TV can receive an external input signal (steps 80, 81). Then, the VTR outputs a video signal for confirmation. If "STANDBY" is not indicated yet, it is determined that the power of the TV is in a off-state, and thus a fourth key operation is performed to turn on the TV. Then, the operation procedure returns to the beginning so as to repeat the same control operation (step 82).

Thus, in the longest case, the special operation key must be operated seven times to set the equipment to a desired operation state.

Although this type of remote control system has an advantage that a desired control operation can be performed only by operating a single key assigned to a special purpose, it also has a disadvantage that the count data 71 correspond one-to-one to the transmission codes 41 and thus each control operation is performed by executing the processing routine always from the beginning, which causes a large number of key operations such as seven key operations in the longest cases.

### SUMMARY OF THE INVENTION

It is an object of the present invention to provide a remote control system having the capability of performing control operations associated with a plurality of control items by operating a single special operation key wherein it is possible to easily perform desired control operations by a less number of key operations.

According to a first aspect of the present invention, there is provided a remote control system for controlling equipment to be controlled from a remote place so as to set the equipment to a desired operation state wherein there are a plurality of combinations of control items to be controlled to achieve the desired operation state, the remote control system comprising: key inputting means; transmission code storage means for storing a plurality of transmission codes used to set the equipment to be controlled to different operation states corresponding to the transmission codes; transmission code generation means for extracting in a given order the plurality of transmission codes stored in the transmission code storage means each time a special operation key of the key inputting means is operated; and transmission means for transmitting the transmission code extracted by the transmission code generation means; wherein: the code generation means sets data that changes the given order of the transmission codes according to a transmission code that has been transmitted in response to the last key operation of the special operation key; the code generation means stores the data in data storage means; and in transmission operations performed after that in response to an operation of the special operation key, the code generation means extracts the transmission codes in the storage order of the data stored in the data storage means.

According to the first aspect of the invention, data corresponding to a transmission code that was transmitted in response to the last key operation of the special operation key is stored in an initial operation, and transmission codes will be transmitted in the order defined by the stored data in response to only one key operation of the special operation key performed after the initial operation.

According to a second aspect of the present invention, there is provided a remote control system for controlling equipment to be controlled from a remote place so as to set the equipment to a desired operation state wherein there are a plurality of combinations of control items to be controlled to achieve the desired operation state, the remote control system comprising: key inputting means; transmission code storage means for storing a plurality of transmission codes used to set the equipment to be controlled to different operation states corresponding to the transmission codes; transmission code generation means for extracting in a given order the plurality of transmission codes stored in the transmission code storage means each time a special operation key of the key inputting means is operated; and transmission means for transmitting the transmission code extracted by the transmission code generation means; wherein: the code generation means identifies a transmission code that has been transmitted in response to the last key operation of the special operation key; the code generation means stores the identified transmission code; and in transmission operations performed after that in response to an operation of the special operation key, the code generation means extracts the identified and stored transmission code in response to the first key operation.

According to the second aspect of the invention, a transmission code that was transmitted in response to the last operation of the special operation key is identified and stored. In operations performed after that, the above-described identified transmission code is transmitted in response to the first key operation of the special operation key. Thus, only one key operation is required.

According to a third aspect of the present invention, there is provided a remote control system for controlling equipment to be controlled from a remote place so as to set the equipment to a desired operation state wherein there are a plurality of combinations of control items to be controlled to achieve the desired operation state, the remote control system comprising: key inputting means; transmission code storage means for storing a plurality of transmission codes used to set first and second equipment to be controlled to respective desired operation states having a close relationship to each other, the first equipment to be controlled having a plurality of controllable operation states, the second equipment to be controlled having a plurality of controllable operation states corresponding to the plurality of controllable operation states of the first equipment to be controlled, the plurality of transmission codes being stored in the form of a plurality of transmission code tables containing a plurality of transmission codes corresponding to a plurality of operation steps to be performed to set the first and second equipment to be controlled to the respective desired operation states; transmission code generation means for extracting the plurality of transmission codes stored in the transmission code storage means each time a special operation key of the key inputting means is operated, wherein the plurality of transmission codes are extracted in an order given to each of the plurality of transmission code tables; transmission means for transmitting the transmission codes extracted by the transmission code generation means; and means for determining whether or not the operation states of the first and second equipment to be controlled has become the desired operation states, respectively; wherein the code generation means selects a transmission code table that requires the least number of key operations to reach the desired operation states and stores the selected transmission code table into table selection data storage means, the selection of the transmission code table being performed judging from what transmission codes were transmitted in response to the operation of the special operation key when the operation states of the first and second equipment to be controlled were set to the respective desired operation states, and wherein in transmission operations performed after that in response to an operation of the special operation key, the code generation means extracts the transmission codes in the order defined in the selected transmission code table.

According to the third aspect of the present invention, a transmission code table that requires the least number of key operations to reach desired operation states is selected and stored in the table selection data storage means. In operations performed after that, the transmission codes are transmitted in the order defined in the above selected transmission code table in response to only one key operation of the special operation key.

According to a fourth aspect of the present invention, there is provided a remote control system for controlling equipment to be controlled from a remote place so as to set the equipment to a desired operation state wherein there are a plurality of combinations of control items to be controlled to achieve the desired operation state, the remote control system comprising: key inputting means; first equipment to be controlled, the first equipment having a signal generator having the capability of outputting signals in a plurality of modes, the signal generator being set in advance such that the signal generator outputs a signal in a predetermined mode; second equipment to be controlled, the second equipment having the capability of receiving signals in a plurality of modes corresponding to the modes of signals the first equipment can output, the second equipment being set such that the second equipment receives a signal in any one of the above modes, the second equipment having means for reporting that the signal has been received when the signal has been received; transmission code storage means for storing a plurality of transmission codes used to set the first and second equipment to be controlled to respective operation states in which the signal generated by the signal generator of the first equipment can be received by the second equipment; transmission code generation means for extracting in a given order the plurality of transmission codes stored in the transmission code storage means each time a special operation key of the key inputting means is operated; and transmission means for transmitting the transmission code extracted by the transmission code generation means; wherein: when the second equipment to be controlled has reported that it has received the signal, the code generation means identifies a transmission code that has been used to set the first and second equipment to the operation states; the code generation means stores the identified transmission code; and in operations of transmitting the transmission code in response to an operation of the special operation key, the code generation means extracts the identified and stored transmission code in response to the first key operation.

According to the fourth aspect of the present invention, when the second equipment to be controlled has reported that the above-described signal has been received, the transmission code that was used to set the operation states is identified and stored. In operations performed after that, the above-described identified transmission code is transmitted in response to the first key operation of the special operation key. Thus, only one key operation of the special operation key is required.

### BRIEF DESCRIPTION OF THE DRAWINGS

Figure 1 is a block diagram illustrating an embodiment of a remote control system according to the present invention;
Figure 2 is a flow chart illustrating the operation of the remote control system shown in Figure 1;
Figure 3 is a schematic diagram illustrating the appearance of a hand unit uses in the remote control system shown in Figure 1;
Figure 4 is a schematic representation of a transmission code table stored in transmission code table storage means shown in Figure 1;
Figure 5 is a block diagram illustrating an operation state concerning a signal transmission system between a VTR and TV;
Figure 6 is a block diagram illustrating a conventional remote control system; and
Figure 7 is a flow chart illustrating the operation of the remote control system shown in Figure 6.

### DETAILED DESCRIPTION OF THE PREFERRED EMBODIMENTS

Referring to the accompanying drawings, preferred embodiments will be described below.

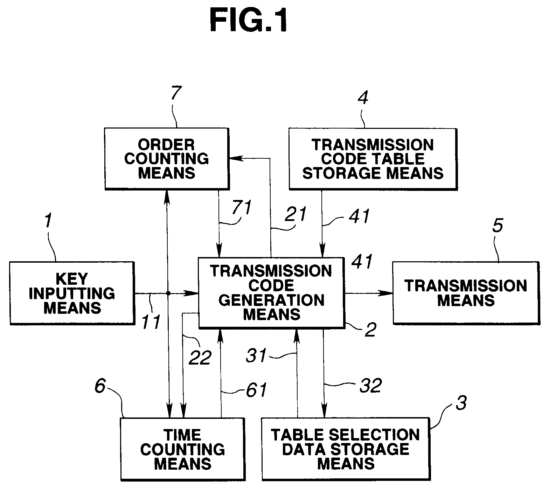

Figure 1 is a block diagram illustrating one embodiment of a remote control system according to the present invention wherein like elements corresponding to those in Figure 6 are marked with the same reference.

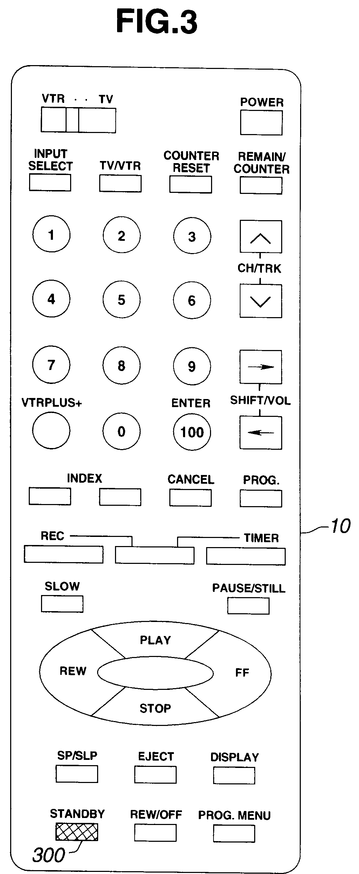

In Figure 1, key inputting means 1 outputs a key input signal 11 each time a user operates the same key. The key inputting means 1 includes for example a "STANDBY" key 300 as in a hand unit 10 shown in Figure 3. When the key 300 of the key inputting means 1 is pressed, a key input signal 11 is generated and supplied to transmission code generation means 2, time counting means 6 and order counting means 7.

When the transmission code generation means 2 receives the key input signal 11, it reads table selection data 31 from table selection data storage means 3 wherein the table selection data 31 has been stored beforehand in the table selection data storage means 3.

The table selection data 31 is used to select a corresponding transmission code table from a plurality of transmission code tables stored in transmission code table storage means 4, wherein each time a key input signal 11 is generated and a code is transmitted, data corresponding to that transmission code is stored in the table selection data storage means. In an initial state of the remote control system, predetermined table selection data is stored in the table selection data storage means.

The transmission code table storage means 4 stores a plurality of transmission code tables each containing a plurality of transmission codes. Each transmission code table includes predetermined transmission codes in such a manner that the transmission codes are transmitted in a predetermined order. When a key input signal 11 is applied to the transmission code generation means 2, the transmission code generation means 2 selects a transmission code table according to table selection data 31 provided by the table selection data storage means 3.

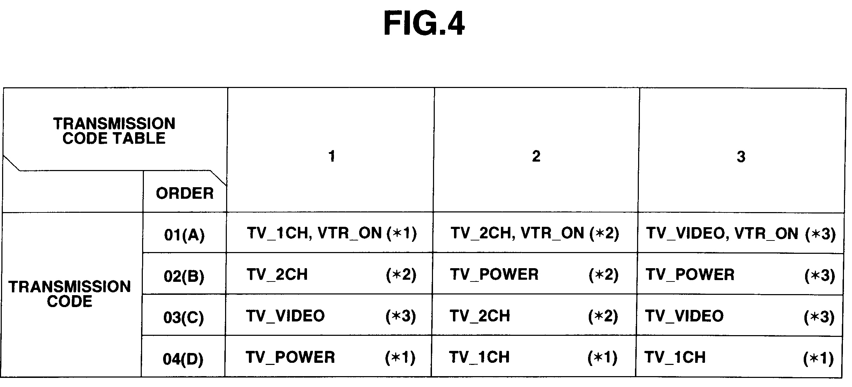

As shown in Figure 4, the transmission code table includes a plurality of code tables each containing a plurality of transmission codes for controlling for example a single or plural pieces of electronic equipment according to a given order, wherein each transmission code table of the present embodiment includes three tables.

In these tables, "TV_1CH" is a transmission code for setting the receiving channel of the TV to channel 1; "TV_2CH" is a transmission code for setting the receiving channel of the TV to channel 2; "TV_VIDEO" is a transmission code for setting the operation mode of the TV to a VTR input mode; "TV_POWER" is a transmission code for turning on or off the power of the TV; and "VTR_ON" is a transmission code for turning on the power of the VTR. In the tables shown in Figure 4, numerals enclosed in parentheses denote table selection data wherein each numeral represents a table number to be selected.

The order counting means 7 is reset to zero in the initialization step. If the order counting means 7 receives a key input signal from the key inputting means 1, it counts the number of key operations of the special operation key and sends the resultant count data 71 to the transmission code generation means 2. This count data 71 is used to specify a transmission code in the selected transmission code table.

Thus, as described above, when the transmission code generation means 2 receives a key input signal 11, it selects a transmission code table identified by the table selection data 31 from the transmission code table storage means 4, and further selects a transmission code 41 from this transmission code table according to the count data of the order counting means 7. The transmission code generation means 2 transfers the selected transmission code 41 to the transmission means 5.

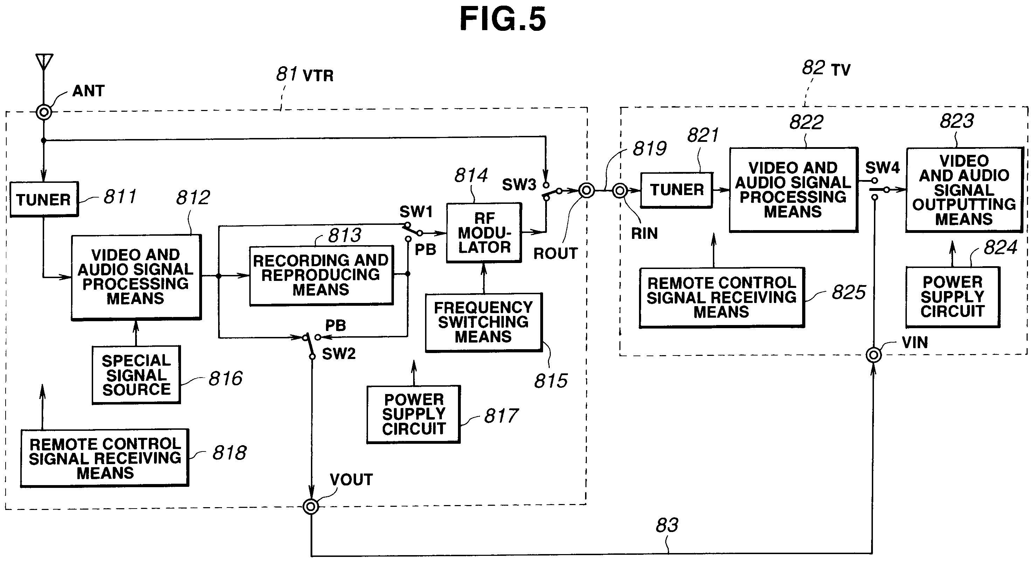

The transmission means 5 transmits the transmission code 41 received from the transmission code generation means 2 as a remote control signal to remote control receiving units (refer to 818 and 825 in Figure 5) of other electronic equipment, wherein the transmission means 5 converts the received transmission code 41 into for example a frequency-modulated infrared signal which is transmitted as the remote control signal via a light emitting diode.

When the time counting means 6 receives a key input signal 11 from the key inputting means 1, it starts a counting operation concerning the time count t. If the special operation key is not operated during a predetermined time T, for example 30 sec, after the starting of the time counting, then the time counting means 6 outputs to the transmission code generation means 2 a signal 61 requesting that the table selection data should be updated, and resets the count to zero and stops the counting operation. If some key other than the special operation key is operated, the count of the time counting means 6 is also reset to zero in response to a signal 22 supplied by the transmission code generation means 2 and the counting operation is stopped.

Referring to Figure 5, a signal path via which a signal is supplied from the VTR to the TV will be described below.

In the VTR 81, a tuner 811 receives a broadcasting signal supplied to an antenna terminal ANT via a cable or an antenna. The received broadcast signal is then converted to video and audio signals at the base band frequency by video and audio signal processing means 812. The video and audio signals are supplied to recording and reproducing means 813 and switches SW1 and SW2. The output of the switch SW1 is converted to an RF signal at a TV channel frequency by an RF modulator 814, and supplied to an RF output terminal ROUT via a switch SW3. The output of the switch SW2 is supplied to a video output terminal VOUT. The frequency of the output signal of the RF modulator 814 is switched by frequency switching means 815 so that the frequency corresponds to for example channel 1 or 2. The broadcast signal received via the antenna terminal ANT may also be supplied directly to the RF output terminal ROUT via the switch SW3. There is a provided a special signal source 816 which generates a character video signal containing for example "STANDBY". The VTR 81 also includes a power supply circuit 817 and remote control signal receiving means 818. The switches SW1 and SW2 are switched into states in which they transfer the output of the video and audio signal processing means 812 unless the operation is in a reproducing mode.

In the TV 82, the signal provided via the RF output terminal ROUT of the VTR 81 is supplied to a tuner 821 via a cable 819 and an RF input terminal RIN. The received television signal is converted to video and audio signals at the base band frequency by video and audio signal processing means 822, and further supplied via a switch SW4 to video and audio signal outputting means 823 having for example a CRT and speaker so that a user can enjoy the video and audio signals. Furthermore, there is also provided a video input terminal VIN via which video and audio signals at the base band frequency may be received directly from an external source wherein the VIN may be connected to the video output terminal VOUT via a cable 83. The TV 82 also includes a power supply circuit 824 and remote control signal receiving means 825.

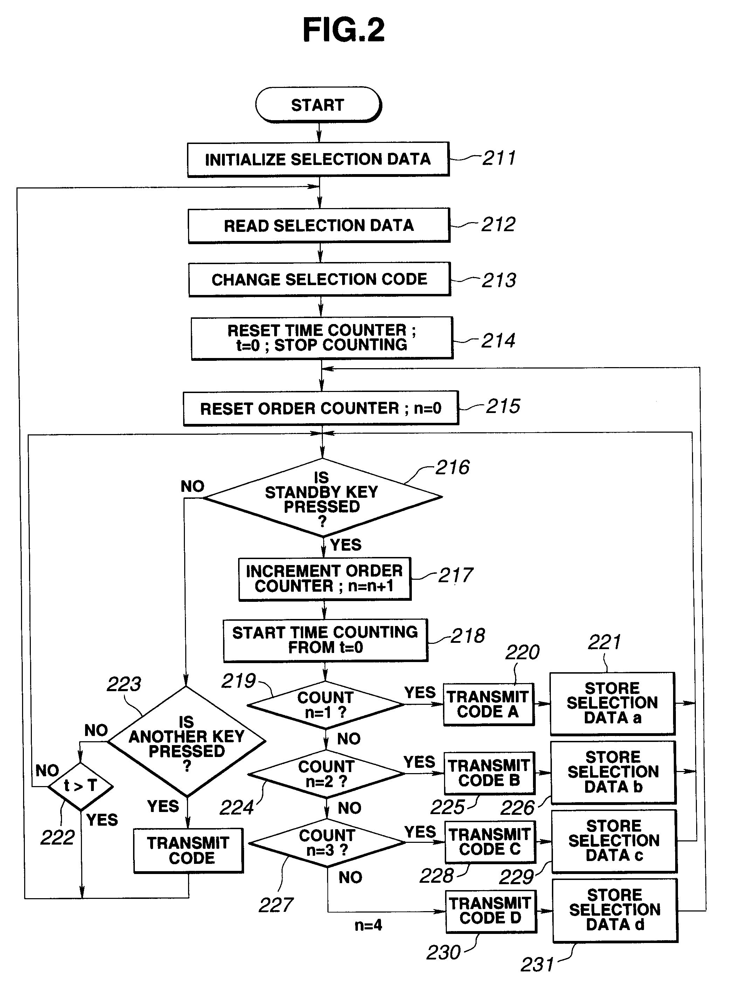

Referring to the flow chart of Figure 2, the operation of the remote control system shown in Figure 1 will be described below.

In the initialization step (step 211), the table selection data storage means 3 is initialized so that predetermined initial data is stored in the table selection data storage means 3. The initial data is for example such data indicating that the table 1 of Figure 4 should be selected. In the initial state, the count value of the time counting means 6 is reset to zero and the time counting means 6 is in a waiting state in which the counting operation is stopped (step 214). The order counting means 7 is also reset to zero (step 215).

In this situation, if the "STANDBY" key serving as the special operation key of the remote control hand set 10 shown in Figure 3 is operated (step 216), the count of the order counting means 7 becomes 1 (step 217) and the time counting means 6 starts its counting operation from zero (step 218). The transition of the count n to 1 in the order counting means 7 is detected in step 219, and a transmission code A is transmitted (step 220). This transmission code A is the first transmission code in the table 1 shown in Figure 4 wherein the transmission code A indicates that the TV receiving channel should be set to channel 1 and the power of the VTR should be turned on. In response to this transmission code, the tuner 821 of the TV 82 shown in Figure 5 is set such that it receives channel 1, and the switch SW4 is switched such that it receives the output of the video and audio signal processing means 822. In this situation if the output of the VTR is provided as an RF signal at a frequency corresponding to channel 1, then the output signal of the special signal source 816 is provided via the switch SW1, the RF modulator 814, and the switch SW3 to the tuner 821 of the TV. The signal of the special signal source 816 is further supplied to the video and audio signal outputting means 823 via the video and audio signal processing means 822 and the switch 4, and thus characters "STANDBY" are indicated on the screen of the CRT (not shown). The user can know from this indication that no further key operation is required. When the code A is transmitted, selection data "a" is stored in the table selection data storage means 3 (step 221). In this case, the selection data "a" is "*1" as shown in Figure 4, which corresponds to the table 1 in the transmission code table storage means 4.

Then, if it is determined that the count t of the time counting means 6 becomes greater than T (step 222), or if a key operation of some key other than the special operation key is detected (step 223), then the selection data "a" in the table selection data storage means 3 is read out (step 212), and the transmission code table is changed properly (step 213). The selection data "a" requests that the table 1 be selected from tables stored in the transmission code table storage means 4, and no change is necessary in this case. If the key inputting means 1 is operated once after that, then the receiving operation mode of the TV is set such that it meets the outputting mode of the VTR. If the transmission of the code A performed in step 220 does not result in the indication of the characters "STANDBY", then the special operation key will be operated again. If the transition of the count n to 2 in the order counting means 7 is detected in step 224, then a transmission code B is transmitted (step 225), and selection data b is stored in the table selection data storage means 3 (step 226). This transmission code B is the second transmission code in the table 1 shown in Figure 4 wherein the transmission code B indicates that the TV receiving channel should be changed to channel 2. If "STANDBY" is indicated on the CRT screen (not shown), the operation of the special operation key is completed here. After the step 222 or 223, the selection data b is read out and the transmission code table is changed properly. In this case, the selection data b is "*2" as shown in Figure 4, which requests that the table 2 in the transmission code table storage means 4 be selected. Thus, the transmission code A becomes such a code indicating that the TV channel should be set to channel 2, and the VTR should be turned on. If the special operation key is operated after that, then the code A is transmitted and thus the TV channel is set to channel 2 and the VTR is turned on. At the same time, the table selection data storage means 3 stores data "*2" as the selection data "a" wherein the data "*2" indicates that the second table should be selected. After that, the transmission code table is no longer changed, and whenever the special operation key is operated once the TV channel is set to channel 2 and the VTR is turned on.

However, if the transmission of the code B performed in step 224 does not result in the indication of the characters "STANDBY", then the special operation key will be operated again. If the transition of the count n to 3 in the order counting means 7 is detected in step 227, then a transmission code C is transmitted (step 228), and selection data c is stored in the table selection data storage means 3 (step 229). This transmission code C indicates that the TV should be changed to a video input mode in which the switch SW4 of the TV 82 shown in Figure 5 is switched to the video input terminal VIN. If the video output terminal VOUT of the VTR 81 is connected via a cable 83 to the video input terminal VIN of the TV 82, then the output signal of the special signal source 816 of the VTR 81 is supplied to the video and audio signal outputting means 823 via the input terminal VIN and the switch SW4 and thus "STANDBY" is indicated on the TV screen. In this case, the selection data c is "*3" as shown in Figure 4, which requests that the table 3 in the transmission code table storage means 4 be selected. Thus, the transmission code A becomes such a code indicating that the TV should be set to the video input mode and the VTR should be turned on. In operations of the special operation key performed after that, the first key operation results in the setting in which the TV is set to the video input mode and the VTR is turned on. Furthermore, after the transmission of the code A, the table selection data storage means 3 stores data "*3" as the selection data "a" wherein the data "*3" indicates that the third table should be selected. After that, the transmission code table is no longer changed.

However, if the transmission of the code C performed in step 224 does not result in the indication of the characters "STANDBY", then the special operation key will be operated further. If it is determined that the count n of the order counting means 7 has changed from 3 to another value or 4 in step 227, then a transmission code D is transmitted (step 230), and selection data d is stored in the table selection data storage means 3 (step 231). This transmission code D indicates that the power of the TV should be switched, and thus turned on in this case. In this case, the selection data d is "*1" as shown in Figure 4, which requests that the table 1 in the transmission code table storage means 4 be selected. Thus, if the following key operation of the special operation key is performed, the transmission codes will be transmitted again from the beginning.

In Figure 4, the transmission codes located in the first row of the transmission code tables 2 and 3 will need no further operations if these codes are transmitted correctly. However, there are also provided second through fourth codes so that the remote control system can also handle the situation in which the TV cannot receive the code correctly due to for example a wrong key operation.

The output signal of the special signal source 816 of the VTR 81 may be provided at another proper time during a period between the first operation of the special operation key and the completion of the setting of the TV. Thus, the transmission of a code that causes the special signal to be output may be started in response to the first key operation of the special operation key, and the transmission of the code may be stopped if some key other than the special operation key is operated or if 30 sec has been elapsed after the key operation of the special operation key. Alternatively, the special signal may also be transmitted for a proper time period each time any of codes A-D is transmitted.

If it is ensured that the tuner 811 of the VTR 81 can receive a broadcast signal, then the special signal source is not necessarily needed.

In the embodiment of the present invention, as described above, if the special operation key is operated during a predetermined time period, for example 30 sec, transmission codes are transmitted in the order defined in the transmission code table storage means 4. On the other hand, if the special operation key is operated at intervals greater than 30 sec, or if some key other than the special operation key is operated, the transmission code that was transmitted in just previous operation may be transmitted in response to the key operation of the special operation key, or otherwise a code table containing the above-described transmission code that was transmitted in just previous operation at the location having the highest priority may be automatically specified, and transmission codes may be transmitted in the order defined in this specified code table. Thus, by only one key operation, the TV can be set to a proper operation mode that meets the operation mode of the VTR and also meets the connection mode between the TV and the VTR.

In the above-described embodiment, there are plural code tables that define the order of the transmission codes. In another embodiment of a remote control system described below, there is only one code table.

For example, the transmission code generation means 2 may place a transmission code, that was transmitted in response to the last key operation of the special operation key, at the first location of the code table in which transmission codes are stored in a predetermined order.

Alternatively, learning of the transmission code generation means 2 may be performed so that transmission codes may be disposed in the code table in an order in which transmission codes that were transmitted more frequently are disposed at locations having higher priorities according to the statistical data on transmission codes transmitted in response to the last key operation of the special operation key.

In the previous embodiment, a transmission code table stored in the transmission code table storage means 4 is automatically selected according to table selection data stored in the table selection data storage means 3. Alternatively, desired selection data specified by a user may also be employed as the table selection data and may be stored in the table selection data storage means 3 by operating a storage key or other keys so that the remote control system may operate in a similar manner to the previous embodiment.

In the above embodiments, data are disposed in each table stored in the transmission code table storage means 4 in predetermined orders. Alternatively, using a data inputting key and a storage key, data may also be arranged in the code table in an arbitrary desired order specified by a user.

The present invention may be applied to any kinds of electronic equipment provided with a remote control system. Furthermore, the present invention may also be applied to remote control systems using a carrier wave other than infrared rays thereby achieving the same purpose.

In the present invention, as described above, once a desired transmission code specified by a user was transmitted using one key, the desired transmission code will be transmitted first and other transmission codes will be transmitted following the first transmission code in a given order by a simple operation without pressing the same key a large number of times whenever the remote control system is used again.

Thus, the present invention provides a remote control system that can be used very easily.

## Claims

1. A remote control system for controlling equipment (81, 82) to be controlled from a remote place so as to set the equipment to a desired operation state wherein there are a plurality of combinations of control items to be controlled to achieve said desired operation state, said remote control system comprising:
key inputting means (1);
transmission code storage means (4) for storing a plurality of transmission codes used to set the equipment to be controlled to different operation states corresponding to the transmission codes;
transmission code generation means (2) for extracting in a given order the plurality of transmission codes stored in said transmission code storage means each time a special operation key (300) of said key inputting means is operated; and
transmission means (5) for transmitting the transmission code extracted by said transmission code generation means;
wherein: said code generation means sets data that changes said given order of the transmission codes according to a transmission code that has been transmitted in response to the last key operation of said key; said code generation means stores said data in data storage means (3); and in transmission operations performed after that in response to an operation of said key, said code generation means extracts said transmission codes in the storage order of the data stored in said data storage means.

2. A remote control system for controlling equipment (81, 82) to be controlled from a remote place so as to set the equipment to a desired operation state wherein there are a plurality of combinations of control items to be controlled to achieve said desired operation state, said remote control system comprising:
key inputting means (1);
transmission code storage means (4) for storing a plurality of transmission codes used to set the equipment to be controlled to different operation states corresponding to the transmission codes;
transmission code generation means (2) for extracting in a given order the plurality of transmission codes stored in said transmission code storage means each time a special operation key (300) of said key inputting means is operated; and
transmission means (5) for transmitting the transmission code extracted by said transmission code generation means;
wherein: said code generation means identifies a transmission code that has been transmitted in response to the last key operation of said key; said code generation means stores said identified transmission code in storage means (3); and in transmission operations performed after that in response to an operation of said key, said code generation means extracts said identified transmission code stored in the storage means (3) in response to the first key operation.

3. A remote control system for controlling equipment (81, 82) to be controlled from a remote place so as to set the equipment to a desired operation state wherein there are a plurality of combinations of control items to be controlled to achieve said desired operation state, said remote control system comprising:
key inputting means (1);
transmission code storage means (4) for storing a plurality of transmission codes used to set first and second equipment (81, 82) to be controlled to respective desired operation states having a close relationship to each other, said first equipment (81) to be controlled having a plurality of controllable operation states, said second equipment (82) to be controlled having a plurality of controllable operation states corresponding to said plurality of controllable operation states of said first equipment (81) to be controlled, said plurality of transmission codes being stored in the form of a plurality of transmission code tables containing a plurality of transmission codes corresponding to a plurality of operation steps to be performed to set said first and second equipment to be controlled to said respective desired operation states;
transmission code generation means (2) for extracting the plurality of transmission codes stored in said transmission code storage means each time a special operation key (300) of said key inputting means is operated, wherein said plurality of transmission codes are extracted in an order given to each of said plurality of transmission code tables;
transmission means (5) for transmitting the transmission codes extracted by said transmission code generation means; and
means (816, 823) for determining whether or not the operation states of said first and second equipment to be controlled has become said desired operation states, respectively;
wherein said code generation means selects a transmission code table that requires the least number of key operations to reach said desired operation states and stores said selected transmission code table into table selection data storage means (3), said selection of the transmission code table being performed judging from what transmission codes were transmitted in response to the operation of said key when the operation states of said first and second equipment to be controlled were set to said respective desired operation states, and wherein in transmission operations performed after that in response to an operation of said key, said code generation means extracts said transmission codes in the order defined in said selected transmission code table.

4. A remote control system according to Claim 1, further including means (6) for detecting a time period between key operations of said key, wherein when a predetermined time has elapsed after the last key operation of said key, said transmission code generation means stores automatically into said data storage means the data corresponding to the transmission code that were transmitted in response to the last key operation of said key.

5. A remote control system according to Claim 1, wherein said transmission code generation means stores said data into said data storage means when some key other than said key is operated.

6. A remote control system according to Claim 2, further including means (6) for detecting a time period between key operations of said key, wherein when a predetermined time has elapsed after the last key operation of said key, said data storage means automatically stores the data corresponding to the transmission code that were transmitted in response to the last key operation of said key.

7. A remote control system according to Claim 2, wherein said transmission code generation means stores said data into said data storage means when some key other than said key is operated.

8. A remote control system according to Claim 3, further including means (6) for detecting a time period between key operations of said key, wherein when a predetermined time has elapsed after the last key operation of said key, said data storage means automatically stores the data corresponding to the transmission codes that were transmitted in response to the last key operation of said key.

9. A remote control system according to Claim 3, wherein said transmission code generation means stores said data into said data storage means when some key other than said key is operated.

10. A remote control system for controlling equipment (81, 82) to be controlled from a remote place so as to set the equipment to a desired operation state wherein there are a plurality of combinations of control items to be controlled to achieve said desired operation state, said remote control system comprising:
key inputting means (1);
first equipment (81) to be controlled, said first equipment having a signal generator (816) having the capability of outputting signals in a plurality of modes, said signal generator being set in advance such that said signal generator outputs a signal in a predetermined mode;
second equipment (82) to be controlled, said second equipment having the capability of receiving signals in a plurality of modes corresponding to the modes of signals said first equipment can output, said second equipment being set such that said second equipment receives a signal in any one of said modes, said second equipment having means for reporting that said signal has been received when said signal has been received;
transmission code storage means (4) for storing a plurality of transmission codes used to set said first and second equipment to be controlled to respective operation states in which said signal generated by said signal generator of said first equipment can be received by said second equipment;
transmission code generation means (2) for extracting in a given order the plurality of transmission codes stored in said transmission code storage means each time a special operation key (300) of said key inputting means is operated; and
transmission means (5) for transmitting the transmission code extracted by said transmission code generation means;
wherein: when said second equipment to be controlled has reported that it has received said signal, said code generation means identifies a transmission code that has been used to set said first and second equipment to the operation states; said code generation means stores said identified transmission code; and in operations of transmitting said transmission code in response to an operation of said key, said code generation means extracts said identified and stored transmission code in response to the first key operation.

11. A remote control system according to Claim 10, wherein: said first equipment to be controlled is a video tape recorder; said second equipment to be controlled is a television receiver; and said signal includes at least a video signal.

12. A remote control system according to Claim 10, further including means (6) for detecting a time period between key operations of said key, wherein when a predetermined time has elapsed after the last key operation of said key, said data storage means automatically stores the data corresponding to the transmission code that were transmitted in response to the last key operation of said key.

13. A remote control system according to Claim 10, wherein said transmission code generation means stores said data into said data storage means when some key other than said key is operated.
